# EUROPEAN PATENT SPECIFICATION

(11) **EP 1 034 024 B1**
(45) Date of publication and mention of the grant of the patent: **17.04.2002**
(21) Application number: 98957102.1
(22) Date of filing: 26.11.1998
(51) Int. Cl.: B01D 46/52, B01D 29/07

(54) **FILTER WITH FORM-RETAINING STABILIZING MEANS**
FILTER MIT FORMERHALTENDEN STABILISIERUNGSMITTELN
FILTRE A MOYEN STABILISATEUR A MEMOIRE DE FORME

(30) Priority: 26.11.1997 IE 970833
(43) Date of publication of application: 13.09.2000
(73) Proprietor: McGoey, Donal Richard, Limerick (IE); Herbert, Diarmuid, Ballyneety, County Limerick (IE); Harrold, Brian, County Antrim, Northern Ireland BT54 6ED (GB)
(72) Inventor: McGoey, Donal Richard, Limerick (IE); Herbert, Diarmuid, Ballyneety, County Limerick (IE); Harrold, Brian, County Antrim, Northern Ireland BT54 6ED (GB)
(74) Representative: McCarthy, Denis Alexis
(86) International application number: IE9800098
(87) International publication number: WO9926711

(56) References cited:
- DE-C- 1 121 438
- DE-U- 8 908 176
- GB-A- 2 020 995
- PATENT ABSTRACTS OF JAPAN vol. 95, no. 5, 30 June 1995 & JP 07 047211 A (TAIKO KK), 21 February 1995
- PATENT ABSTRACTS OF JAPAN vol. 97, no. 11, 28 November 1997 & JP 09 173748 A (HIRUTA KOGYO KK), 8 July 1997
- PATENT ABSTRACTS OF JAPAN vol. 17, no. 606, 8 November 1993 & JP 05 184843 A (DAIKIN IND LTD), 27 July 1993

## Description

The invention relates to filter means comprising a filter medium of non-flat contour and stabilizing means,
(a) which are formed by applying a semi-liquid material onto the filter medium, and
(b) which are hardenable in a shape, according to the contour of the filter medium.

The invention also relates to a method of producing such a filter means.

Filters usually contain a filter medium, such as glass paper, micro spun bonded polypropylene or cotton fibre mat. Such filter medium is used particularly for filtering air. To achieve a high filtering effect, i.e. to retain as many particles as possible in the filter medium, the sheets of filter medium are pleated in a zig-zag-manner.

The pleated sheets are unstable and need support. Commonly the sheets are glued into a cardboard-frame with support strings. These support strings reduce the effective filter surface and therefore lead to inferior filtering characteristics.

This problem has been solved in the past by putting lines of glue onto the pleated medium and pleating the sheet with a very narrow pleating angle so that adjacent portions are glued together and thereby the firmness of the filter medium is improved (DE-A-121 435). This procedure has several disadvantages. The glue needs to be applied on both sides of the filter medium to avoid bending of the complete filter medium. Furthermore the glue is still flexible after hardening and can therefore not be applied to pleated filter media with a larger pleating angle. Another disadvantage is the viscosity of the glue which leads to difficulties when inserting the glue into the very end of the angles formed by the sheet. Similar stabilizing means are described in DE-U-8 908 176.5 and JP-A-07 047 211.

Another form of support for the filter medium is the use of a metal grid. The metal grid is formed from thin wires, which are sufficiently strong to support the medium but still thin enough to be flexible. This grid is put onto the flat sheet of filter medium usually cotton mat and the two layers are then pleated into the desired configuration afterwards. The metal grid has the advantage of being strong enough to support the filter medium on one side only. The disadvantage of this kind of support is that the pleating of the grid together with the filter medium is difficult. Furthermore the metal grid has sharp ends which could cause injuries during its handling or damage the filter medium, especially when the filter medium needs to be cut into the desired dimensions. Also, it is necessary to glue the metal grid to the filter medium.

It is another disadvantage that the metal grid can become rusty. This can cause extra particles in the filtered air and is not desirable from an aesthetic point of view. The recycling of such filters is obviously difficult because the different materials have to be separated before further treatment.

It is an object of the invention to overcome the aforementioned problems and to provide a safe and cheap stabilizing means which is easy to handle and has improved characteristics.

According to the invention this object is achieved by a filter as defined in claim 1 and by a method as defined in claim 8.

Advantageously stabilizing means are firmly connected with the filter medium after hardening. Preferably, the stabilizing means are connected with the filter medium from one side only.

Conveniently, the stabilizing means are connected with the filter medium at the downstream side of the filter medium.

The filter medium is formed from a sheet which is pleated in a zig-zag-manner to form a contour of a plurality of V-shapes.

Most preferably, the filtered medium is air and that the pleating angle is optimized with respect to filtering parameters.

Advantageously, the stabilizing means are applied in the form of one or more parallel strips.

Alternatively, the stabilizing means are applied in form of one or more non parallel strips and thereby forming a grid.

In a preferred embodiment, the stabilizing means and the filter medium are made from the same material i.e. from polypropylene.

In another embodiment the stabilizing means has a colour in accordance with a specified code.

Such a filter stabilizing means need to be applied from one side of the filter medium only. This saves costs and efforts while still achieving excellent stability. By using the same material, i.e. polypropylene, for the stabilizing means and for the filter medium very good bonding characteristics are obtained, which are far superior to the adhesive characteristics of the commonly used glue. The filter medium in this case can be made of micro spun bonded polypropylene. It is another advantage of using the same material, that it can easily and environmentally friendly incinerated.

The use of stabilizing means according to the invention also has the advantage, that it reaches the comers of, for example, the V-shaped profile which is otherwise difficult to achieve. The shape of the filter medium, i.e. the pleating angles, can be easily set before the stabilizing means and the filter medium are combined. The contour remains firm after hardening and does not require any further retaining means, such as the cardboard strings used in the prior art.

Cutting the filter means according to the invention is also very easy. Furthermore the filter means do not decay when exposed to changing conditions such as moisture or temperature conditions, as long as the temperature is lower than the melting point of the stabilizing means.

The polypropylene can be dyed in accordance with a specified code. This code can be used for example to identify the characteristics of the filter means, such as retaining capacity, air flow, size or price.

The invention will now be described more particularly with reference to the accompanying drawings which show by way of example only, embodiments of the invention.

In the drawings:
Fig. 1 shows a perspective view of a filter medium, pleated in a zig-zag-manner
Fig. 2 shows a cross sectional view of a stabilizing means formed from a strip after heating
Fig 3 shows a grid for producing an alternative stabilizing means with increased stability
Fig. 4 shows a perspective view of the filter medium of Fig. 1 after applying the stabilizing means by heat welding.
Fig. 5 shows a cross sectional view of the filter medium and stabilizing means of Fig. 5

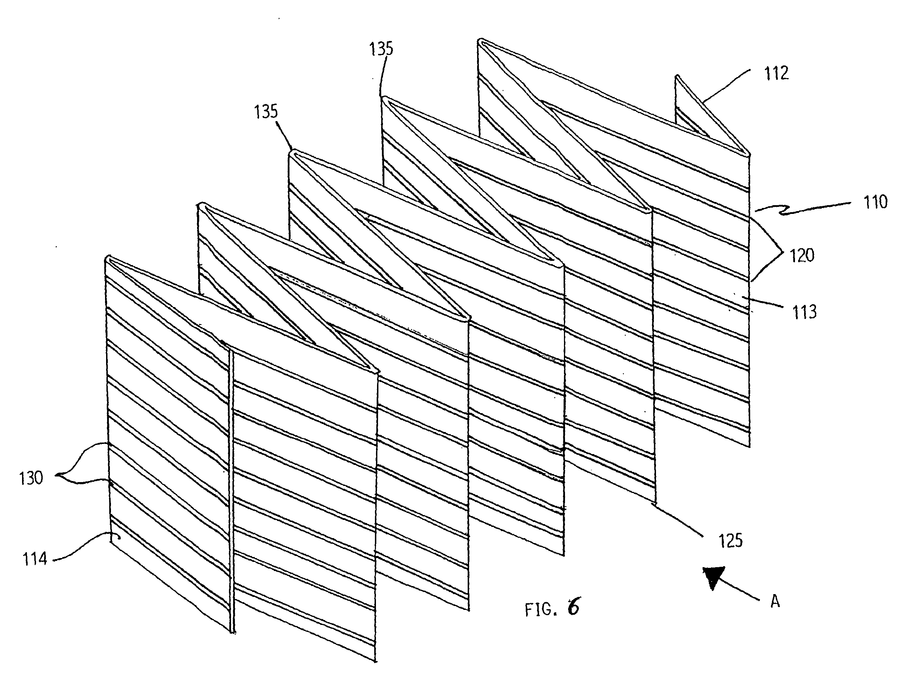

Fig. 6 is a perspective view of a further embodiment of a filter according to the invention in which the pleats of the filter are opened out in a zig-zag manner;
Fig. 7 is a front end view of three of the pleats of the embodiment shown in Fig. 6 in which the stabilizers of adjoining pleats are in a contiguous relationship in the direction of arrow A in Fig. 6; and
Fig. 8 is a perspective view of one pleat of the Fig. 6 embodiment.

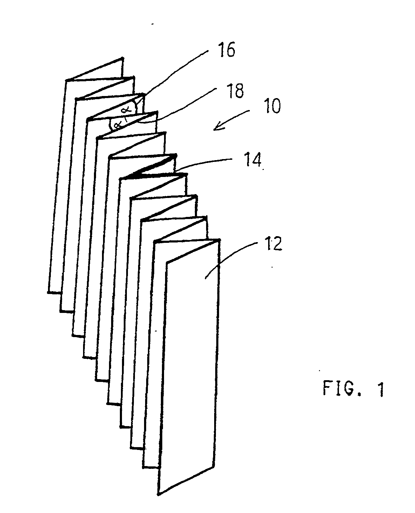

In Fig. 1 numeral 10 denotes a filter medium. The filter medium 10 can consist of a sheet 12 of any material suitable for filtering, such as spun-glass, polyester, polyethylene, cotton or the like. In this particular embodiment the sheet material is micro spun polypropylene which has excellent filtering characteristics for filtering air and which is particularly suitable for the use with polypropylene stabilizing means. The sheet 12 is pleated in a zig-zag-manner in order to improve the filtering capacity. This is well known and need not be described here in detail. The optimum number of V-s 14 with respect to air flow resistance, i.e. the optimum number of pleats for this particular sheet per metre is 36, not all of them being shown in the drawing. One of the V-s 14 is highlighted in Fig. 1. The number of V-s depends on the material used for the sheet, its thickness and various other parameters.

The angles α,α' 16 and 18 defined by the pleated sections are the same and are in the range of 15 degrees. The filter medium 10 by itself suffers from low stability, i.e. it can be twisted, pushed together or pulled apart like an accordion. It therefore needs to be stabilized.

A stabilizing means 20 according to the invention is shown in Fig. 2. The stabilizing means 20 is formed from a strip of polypropylene which has been applied to the filter medium in a semi-liquid form. The stabilizing means 20 have a thickness of about 0,5cm.

For a sheet 12 of 25 cm height three such stabilizing means 20 are sufficient. When applying, the material has a sufficient viscosity to fill the space 22 in the comers of the V-s in a bridge-like manner which, after hardening, contributes to the stability of the set-up.

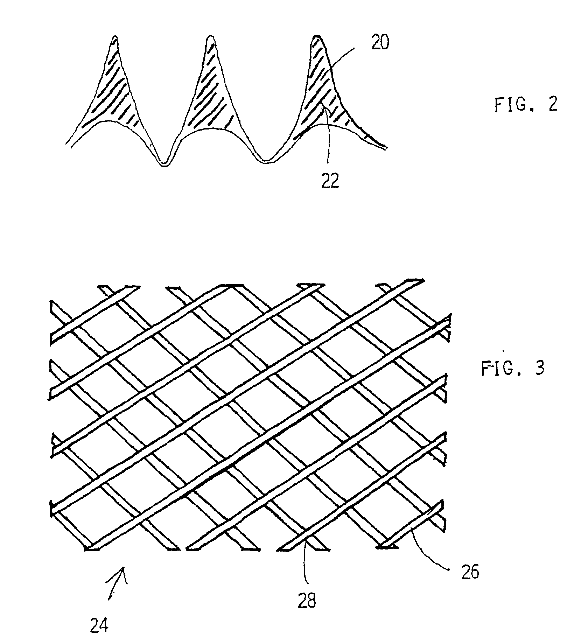

In Fig. 3 a grid 24 is shown. The grid consists of thin strips 26 of polypropylene which are heat welded together at connection points 28 The diameter of the strips is in this particular grid about 1 mm. The two dimensional grid 24 can be used instead of the one dimensional strips for forming the stabilizing means.

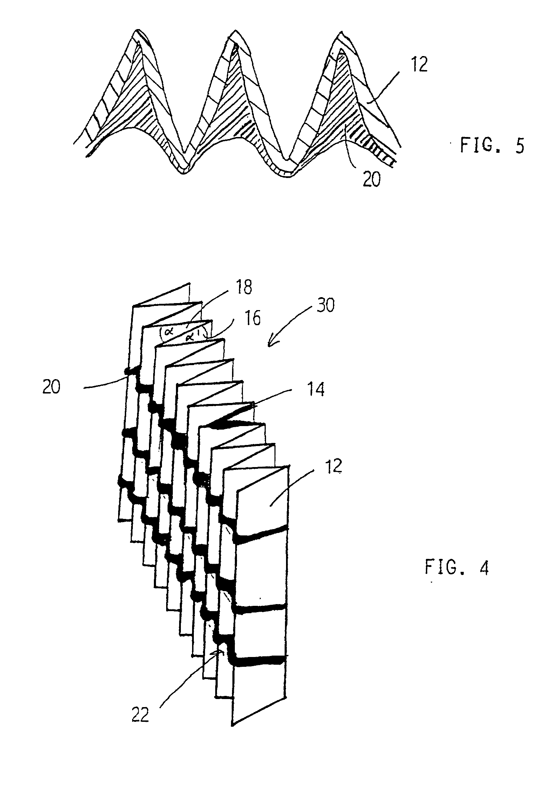

In Fig. 4 and 5 the stabilized filter means 30 is shown. The heated stabilizing means 20 is combined from one side with the sheet of filter medium, the stabilizing means matching the contour of filter medium whereby the corners of the V-s are reached. When the polypropylene is hot and soft, it fills the gaps. At the same time the polypropylene of the filter medium is welded to the polypropylene of the stabilizing means.

After cooling down the polypropylene hardens and therefore stabilizes the filter medium in its configuration. The angles 16 and 18 are then fixed and the "accordion" effect is avoided.

The polypropylene can be dyed in accordance with a pre-set code in order to facilitate identification of the various filter means.

The stabilizing means 20 are applied by being extended over the pleats of the medium in the desired configuration and then hardened by blowing cold air over the assembly.

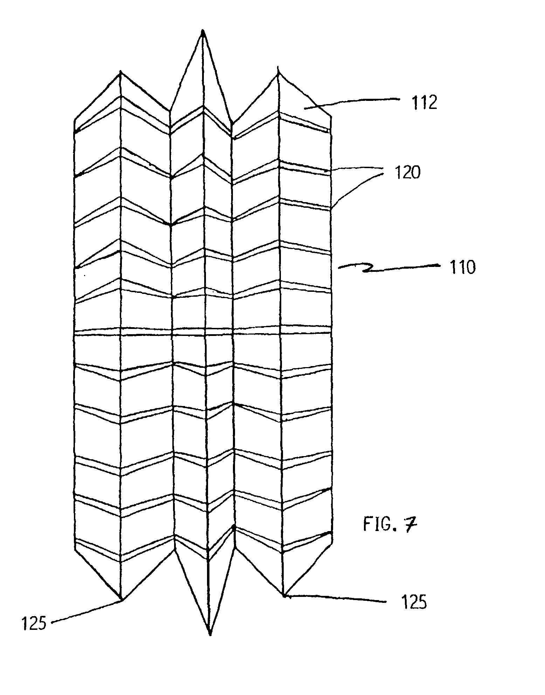

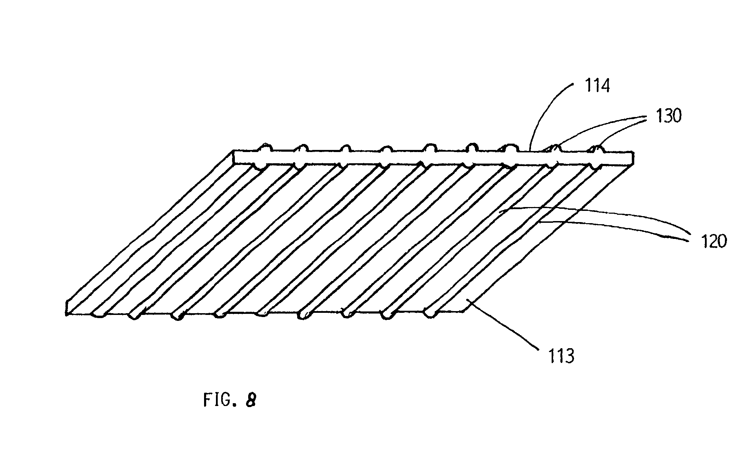

Referring to the further embodiment shown in Figs. 7 to 9, the filter medium 110 consists of a sheet 112 of filter material. The sheets 112 are pleated in a zig-zag manner. A stabilizer 120 is applied to the front face 113 of the sheets 112 and a further stabilizer 130 is applied to the rear face 114. The stabilizers 120 are a series of parallel strips of polypropylene formed on the front face 113 and the stabilizers 130 are a series of parallel strips of polypropylene on the rear face 114.

When brought into contiguous relationship the stabilizers 120 contact one another and keep the pleats at the desired spacing from one another. The stabilizers 130 also contact one another and maintain the pleats apart at the rear face of the filter.

To form the filter, the stabilizers 120 and 130 are sprayed onto a flat sheet of filter medium 110, the pleats are formed by a pressure plate contacting the sheet at regular intervals to form crease lines 125 and 135 on the front and rear faces 113 and 114.

It will of course be understood that the invention is not limited to the specific details described herein, which are given by way of example only, and that various modifications and alterations are possible within the scope of the invention, as defined in the appended claims.

## Claims

1. A filter comprising a filter medium of a pleated construction and stabilising means formed from a melted material and hardened into a shape corresponding to the pleated construction **characterised in that** the stabilising means are formed by applying lines of polypropylene melted material onto a flat sheet of filter medium and only then folding the sheet of filter medium with the applied lines of polypropylene into a series of parallel folds so as to achieve a sharp edged "V" shaped pleated construction in which the polypropylene lines are crossing the pleat lines, and allowing the melted polypropylene to harden.

2. A filter according to Claim 1, in which the polypropylene material is firmly connected with the filter medium after hardening on either one or both sides of the filter medium.

3. A filter as claimed in any one of the preceding claims, in which the stabilising means comprise a plurality of parallel strips.

4. A filter as claimed in Claim 1 or Claim 2, in which the stabilising means comprise a plurality of non-parallel strips interengaging to form a grid structure on one or both sides of the filter medium.

5. A filter as claimed in any one of the preceding claims, in which the stabilising means and filter medium are both made from a polypropylene material.

6. A filter as claimed in any one of the preceding claims, in which the stabilising means is given a specific colour, so that a user can distinguish specific filters for specific purposes.

7. A filter as claimed in any one of the preceding claims, in which spaces or gaps between the "V" shaped pleats of the filter medium are bridged by a strip of polypropylene at one side of the filter.

8. A method of producing a filter comprising the steps of applying lines of polypropylene melted material onto a flat sheet of filter medium, only then folding the sheet of filter medium with the applied lines of polypropylene into a series of parallel folds so as to achieve a sharp edged "V" shaped pleated construction in which the lines of polypropylene cross the pleat lines, and allowing the polypropylene material to harden.

## Patentansprüche

1. Ein Filter enthaltend ein Filtermedium mit gefaltetem Aufbau und Stabilisiermittel, welche aus geschmolzenem Material geformt sind und in einer Form aushärten, welche dem gefalteten Aufbau entsprechen, **dadurch gekennzeichnet, daß** die Stabilisiermittel durch Auftragen von Linien aus geschmolzenem Polypropylen-Material auf eine flache Lage des Filtermediums und darauffolgendes Falten der Lage des Filtermediums mit den aufgetragenen Linien aus Polypropylen in eine Reihe von parallelen Faltungen, wodurch ein scharfer, "V"-förmig gefalteter Aufbau erhalten wird, in welchem die Linien aus Polypropylen die Faltlinien kreuzen, und aushärten lassen des geschmolzenen Polypropylens.

2. Ein Filter nach Anspruch 1, in welchem das Polypropylen-Material nach dem Aushärten auf entweder einer oder auf beiden Seiten des Filtermediums fest mit dem Filtermedium verbunden ist.

3. Ein Filter nach einem der vorgehenden Ansprüche, in welchem die Stabilisiermittel eine Vielzahl von parallelen Streifen umfassen.

4. Ein Filter nach Anspruch 1 oder 2, in welchem die Stabilisiermittel eine Vielzahl von nicht-parallelen Streifen umfassen, die untereinander miteinander verbunden sind und eine Gitterstruktur auf einer oder auf beiden Seiten des Filtermediums bilden.

5. Ein Filter nach einem der vorgehenden Ansprüche, in welchem die Stabilisiermittel und das Filtermedium beide aus Polypropylen-Material hergestellt sind.

6. Ein Filter nach einem der vorgehenden Ansprüche, in welchem die Stabilisiermittel mit einer speziellen Farbe versehen werden, damit der Anwender spezielle Filter für spezielle Zwecke unterscheiden kann.

7. Ein Filter nach einem der vorgehenden Ansprüche, in welchem Zwischenräume oder Lücken zwischen den "V"-förmigen Faltungen des Filtermediums durch einen Streifen aus Polypropylen auf einer Seite des Filters überbrückt werden.

8. Ein Verfahren zur Herstellung eines Filters enthaltend die Schritte Auftragen von Linien aus geschmolzenem Polypropylen-Material auf eine flache Lage aus Filtermedium, erst danach Falten der Lage aus Filtermedium mit den aufgetragenen Linien aus Polypropylen in eine Serie aus parallelen Faltungen, wodurch ein scharfer, "V"-förmig gefalteter Aufbau erhalten wird, in welchem die Linien aus Polypropylen die Faltlinien überkreuzen, und aushärten lassen des Polypropylen-Materials.

## Revendications

1. Filtre comprenant un milieu filtrant constitué d'une construction plissée et de moyens stabilisateurs formés à partir d'un matériau fondu et durci suivant une configuration correspondant à la construction plissée, **caractérisé en ce que** les moyens stabilisateurs sont formés en appliquant des lignes de matériau fondu de polypropylène sur une feuille plate de milieu filtrant et, alors seulement, en pliant la feuille de milieu filtrant comportant les lignes appliquées de polypropylène en une série de plis parallèles de façon à obtenir une construction plissée configurée en "V" à bords effilés, dans laquelle les lignes de polypropylène traversent les lignes de plis et permettant au polypropylène fondu de durcir.

2. Filtre selon la revendication 1, dans lequel le matériau de polypropylène est solidement lié au milieu filtrant après durcissement sur l'un ou l'autre ou sur les deux côtés du milieu filtrant.

3. Filtre selon l'une quelconque des revendications précédentes, dans lequel les moyens stabilisateurs comprennent une pluralité de bandes parallèles.

4. Filtre selon la revendication 1 ou la revendication 2, dans lequel les moyens stabilisateurs comprennent une pluralité de bandes qui ne sont pas parallèles s'entrecroisant pour former une structure de grille sur l'un ou sur les deux côtés du milieu filtrant.

5. Filtre selon l'une quelconque des revendications précédentes, dans lequel les moyens stabilisateurs et le milieu filtrant sont tous deux constitués d'un matériau de polypropylène.

6. Filtre selon l'une quelconque des revendications précédentes, dans lequel on donne aux moyens stabilisateurs une couleur spécifique, de façon qu'un utilisateur puisse distinguer les filtres spécifiques correspondant à des objectifs spécifiques.

7. Filtre selon l'une quelconque des revendications précédentes, dans lequel des espaces ou des intervalles entre les plis configurés en "V" du milieu filtrant sont reliés par une bande de polypropylène au niveau d'un côté du filtre.

8. Procédé de fabrication d'un filtre comprenant les étape consistant à appliquer des lignes de matériau fondu de polypropylène sur une feuille plate du milieu filtrant, à plier alors seulement la feuille de milieu filtrant comportant des lignes appliquées de polypropylène en une série de plis parallèles de façon à obtenir une construction plissée configurée en "V" à bords effilés dans laquelle les lignes de polypropylène traversent les lignes de plis, et à permettre au matériau de polypropylène de durcir.
